# EUROPEAN PATENT APPLICATION

(11) **EP 4 450 975 A1**
(43) Date of publication of application: **23.10.2024**
(21) Application number: 22907106.3
(22) Date of filing: 15.11.2022
(51) Int. Cl.: G01N 35/02

(54) **AUTOMATED ANALYZING DEVICE**

(30) Priority: 15.12.2021 JP 2021203248
(71) Applicant: HITACHI HIGH-TECH CORPORATION, Tokyo 105-6409 (JP)
(72) Inventor: SAKATA Kenshiro, Tokyo 105-6409 (JP); SUZUKI Yoichiro, Tokyo 105-6409 (JP); KAWAHARA Tetsuji, Tokyo 105-6409 (JP); TAKAHASHI Takuya, Tokyo 105-6409 (JP)
(74) Representative: Strehl Schübel-Hopf & Partner
(86) International application number: PCT/JP2022/042304
(87) International publication number: WO 2023/112575

(57) **Abstract**

Provided is an automatic analyzer that detects an abnormality of an electrode constituting a stirring mechanism with high accuracy and suppresses decline in processing capability. The automatic analyzer comprises: a sample dispensing mechanism that dispenses a sample into a reaction container; a reagent dispensing mechanism that dispenses a reagent into the reaction container; a stirring mechanism that has an electrode; a reaction disk that rotates and stops the reaction container; and a control unit that, when the reaction container containing a mixture of the sample and the reagent is stopped at a stirring position, applies a voltage to the electrode and irradiates the mixture with ultrasonic waves. The control unit applies a voltage to the electrode and measures an electric impedance when, during operation, the reaction container into which a liquid has been dispensed by the reagent dispensing mechanism in an empty state is stopped at the stirring position.

## Description

### Technical Field

The present invention relates to an automatic analyzer.

### Background Art

Technology for mixing a sample and a reagent in a reaction container in a non-contact manner by using an effect of acoustic radiation pressure of ultrasonic waves has been developed and has been implemented and put into practical use in automatic analyzers. In the technology, a voltage is applied to a piezoelectric element to generate ultrasonic waves, and the ultrasonic waves are emitted toward a reaction container using constant-temperature water in a constant temperature bath, or the like as a medium, thereby mixing liquids in the reaction container. The following PTLs are known as technology for detecting abnormalities related to irradiation with ultrasonic waves.

For example, PTL 1 discloses an automatic analyzer that applies a voltage to a piezoelectric element, which serves as an ultrasonic wave generation source, when stirring a sample and a reagent and detects abnormalities such as insufficient intensity of generated ultrasonic waves due to deterioration in the piezoelectric element, or the like from waveforms detected then. PTL 2 discloses an automatic analyzer that detects abnormalities such as the presence of a container or a reaction solution by applying a voltage lower than that during stirring to a piezoelectric element and measuring an electric impedance before stirring the reaction solution using ultrasonic waves from the piezoelectric element.

### Citation List

### Patent Literature

PTL 1: JP3746239B
PTL 2: JP2010-96638A

### Summary of Invention

### Technical Problem

However, in the technology of PTL 1 and PTL 2 mentioned above, when a reaction container accommodating a reaction solution containing a sample and a reagent is placed at a stirring position, a voltage is applied to an electrode of a piezoelectric element to detect an abnormality, which affects the accuracy of detection due to liquid properties of the reaction solution. When another sequence for abnormality detection is added before stirring the mixture as in the technology of PTL 2, the processing capability of the automatic analyzer will be deteriorated.

The invention has been made to solve such problems, and an object thereof is to provide an automatic analyzer that detects an abnormality of an electrode constituting a stirring mechanism with high accuracy and suppresses decline in processing capability.

### Solution to Problem

To solve the above-described problems, the invention provides an automatic analyzer including a sample dispensing mechanism that dispenses a sample into a reaction container, a reagent dispensing mechanism that dispenses a reagent into the reaction container, a stirring mechanism that has an electrode, a reaction disk that rotates and stops the reaction container, and a control unit that, when the reaction container containing a mixture of the sample and the reagent is stopped at a stirring position, applies a voltage to the electrode and irradiates the mixture with ultrasonic waves, in which the control unit applies a voltage to the electrode and measures an electric impedance when, during operation, the reaction container into which a liquid has been dispensed by the reagent dispensing mechanism in an empty state is stopped at the stirring position.

### Advantageous Effects of Invention

According to the invention, it is possible to provide an automatic analyzer that detects an abnormality of an electrode constituting a stirring mechanism with high accuracy and suppresses decline in processing capability.

### Brief Description of Drawings

[Fig. 1] Fig. 1 is a general configuration diagram of an automatic analyzer.
[Fig. 2] Fig. 2 is a view that shows the structure of a dispensing mechanism.
[Fig. 3] Fig. 3 is a view that shows details of a stirring mechanism.
[Fig. 4] Fig. 4 is a diagram that shows a stirring mechanism, and a power amplifier and an impedance measuring unit which are connected to the stirring mechanism.
[Fig. 5] Fig. 5 is a diagram that shows details of the structure of an impedance measuring circuit.
[Fig. 6A] Fig. 6A is a graph that shows ImpS measured by a piezoelectric element in a normal state.
[Fig. 6B] Fig. 6B is a graph that shows ImpS measured by a piezoelectric element in a deteriorated state.
[Fig. 6C] Fig. 6C is a graph that shows ImpS measured by a piezoelectric element in a faulty state.
[Fig. 7] Fig. 7 is a graph that shows change over time in the peak value of electric impedance measured by a piezoelectric element.
[Fig. 8A] Fig. 8A is a conceptual diagram that shows a reflected wave which is generated when a reaction container containing a liquid is irradiated with ultrasonic waves.
[Fig. 8B] Fig. 8B is a graph of ImpS which is measured when a reaction container containing a liquid is irradiated with ultrasonic waves.
[Fig. 9A] Fig. 9A is a conceptual diagram that shows a reflected wave which is generated when an empty reaction container is irradiated with ultrasonic waves.
[Fig. 9B] Fig. 9B is a graph of ImpS which is measured when an empty reaction container is irradiated with ultrasonic waves.
[Fig. 10] Fig. 10 is a diagram that shows operation of a first stirring mechanism to a sixth stirring mechanism in each cycle.
[Fig. 11] Fig. 11 is a time chart that shows operation of a stirring mechanism according to Example 1 in each cycle.
[Fig. 12] Fig. 12 is a flowchart that concerns abnormality determination on a piezoelectric element which is performed in background maintenance according to Example 1.
[Fig. 13] Fig. 13 is a time chart that shows operation of a stirring mechanism according to Example 2 in each cycle.
[Fig. 14] Fig. 14 is a flowchart that concerns abnormality determination on a piezoelectric element which is performed in background maintenance according to Example 2.
[Fig. 15] Fig. 15 is a flowchart that concerns abnormality determination on a piezoelectric element which is performed in background maintenance according to Example 3.

### Description of Embodiments

A mode for carrying out the invention will be described in detail based on the drawings. Embodiments described below are merely examples, and components and element steps thereof are not essential unless specifically stated or obvious in principle.

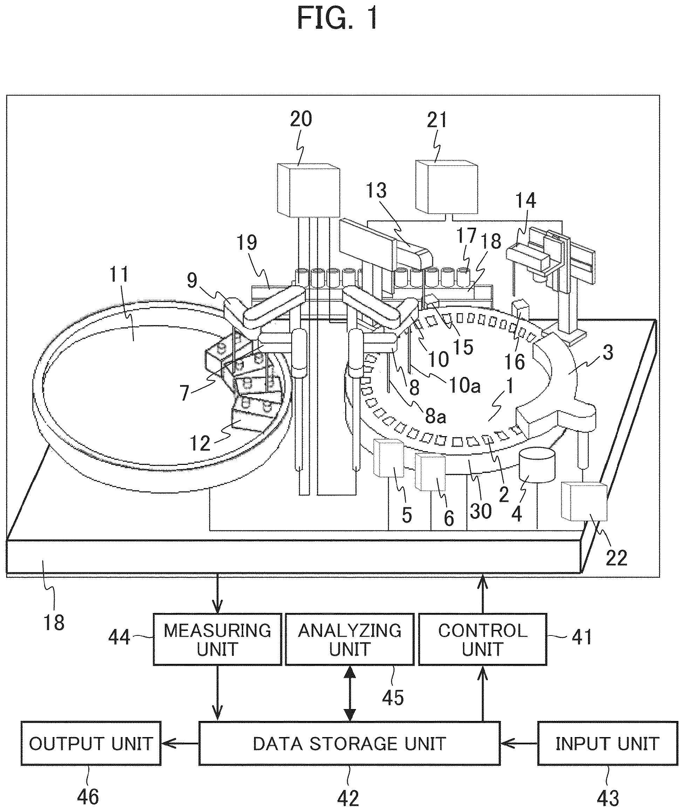

Fig. 1 is a general configuration diagram of an automatic analyzer. The automatic analyzer mainly includes a sample transport mechanism 19, a reagent disk 11 on which a reagent bottle 12 is mounted, a reaction disk 1 on which a reaction container 2 is mounted, sample dispensing mechanisms 13 and 14, reagent dispensing mechanisms 7, 8, 9, and 10, stirring mechanisms 5 and 6, a spectral photometer 4, a cleaning mechanism 3, cleaning tanks 15 and 16, a reagent pump 20, a sample pump 21, and a cleaning pump 22. The automatic analyzer includes a control unit 41 that controls each part, a data storage unit 42 that stores various types of data, an input unit 43 that inputs necessary data from the outside to the data storage unit 42, a measuring unit 44 that calculates an absorbance from the amount of light obtained by the spectral photometer 4, an analyzing unit 45 that calculates a component amount from the absorbance, and an output unit 46 that displays or outputs the analyzed component amount data and the like to the outside. The reaction container 2 disposed in a circumferential direction of the reaction disk 1 is in contact with constant-temperature water circulating in a constant temperature bath 30, and is maintained at a constant temperature via constant-temperature water at a designated temperature.

Here, the sample transport mechanism 19 transports a rack 18 (transport member) capable of mounting one or more sample containers 17 containing samples (specimens) to be analyzed. On the reagent disk 11, a plurality of reagent bottles 12 containing reagents used for sample analysis are disposed side by side in the circumferential direction. On the reaction disk 1, a plurality of reaction containers 2 for mixing and reacting a sample and a reagent are disposed side by side in the circumferential direction. The sample dispensing mechanisms 13 and 14 dispense a sample from the sample container 17, which is transported to a sample dispensing position by the sample transport mechanism 19, to the reaction container 2. The reagent dispensing mechanisms 7, 8, 9, and 10 dispense a reagent from the reagent bottle 12 into the reaction container 2. The stirring mechanisms 5 and 6 stir a mixture (reaction solution) of the sample and the reagent dispensed into the reaction container 2. The spectral photometer 4 receives transmitted light obtained through the reaction solution in the reaction container 2 from a light source (not shown). The cleaning mechanism 3 cleans the used reaction container 2. The cleaning tanks 15 and 16 are disposed within operating ranges of the sample dispensing mechanisms 13 and 14, respectively, and clean sample nozzles with cleaning water. Cleaning tanks (not shown) are also disposed in the operating ranges of the reagent dispensing mechanisms 7, 8, 9, and 10, respectively, and each reagent nozzle is cleaned with cleaning water in each cleaning tank.

A component amount of a sample is analyzed mainly according to the following procedure. First, a sample in the sample container 17 placed on the rack 18 transported near the reaction disk 1 by the sample transport mechanism 19 is dispensed to the reaction container 2 on the reaction disk 1 by the sample nozzle of the sample dispensing mechanism 13 (14). Next, a reagent to be used for analysis is dispensed by the reagent nozzles of the reagent dispensing mechanisms 7, 8, 9, and 10 from the reagent bottle 12 on the reagent disk 11 into the reaction container 2 into which the sample has been previously dispensed.

Subsequently, the mixture of the sample and the reagent in the reaction container 2 is stirred by the stirring mechanism 5 (6). Thereafter, the measuring unit 44 transmits light generated from the light source through the reaction container 2 containing the stirred mixture, measures the luminous intensity of the transmitted light with the spectral photometer 4, and stores the obtained absorbance data in the data storage unit 42. The analyzing unit 45 analyzes the stored absorbance data based on calibration curve data. Through the analysis, a component amount contained in the sample can be analyzed. Data necessary for controlling and analyzing each part of the automatic analyzer is input from the input unit 43 to the data storage unit 42, and various types of data and analysis results are displayed or output from the output unit 46.

The above description is an example of a configuration when the automatic analyzer performs biochemical analysis, and a measuring mechanism differs depending on an analysis content executed by the automatic analyzer. Known measuring methods used with automatic analyzers include an analysis method using a reagent that changes the color of a reaction solution by reacting with an analysis target component in a sample (colorimetric analysis), an analysis method using a reagent with a label added to a substance which is directly or indirectly specifically coupled to an analysis target component in a sample and counting labels (immunoassay), and the like. However, all of the analysis methods include a step of dispensing and mixing a sample contained in a sample container or a reagent contained in a reagent bottle into a reaction container using a dispensing mechanism. The dispensing mechanism of the present embodiment is applicable to an automatic analyzer capable of performing analysis including a dispensing step.

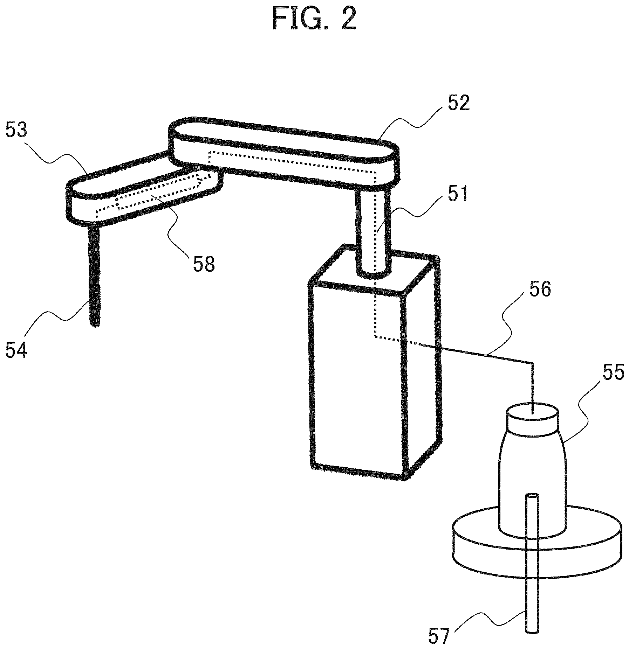

Fig. 2 is a view that shows the structure of the dispensing mechanism. In the dispensing mechanism, one end of a θ₁ arm 52 is attached to be rotatable within an XY plane to an upper end position of a shaft 51 that can be driven up and down (in a Z-axis direction) . One end of a θ₂ arm 53 is attached to the other end which is a free end of the θ₁ arm 52 to be rotatable within the XY plane. A dispensing nozzle 54 is attached to the other end which is a free end of the θ₂ arm 53 to extend downward in the Z-axis direction. The dispensing nozzle 54 and a syringe 55 are connected to each other via a tube 56. The tube 56 passes through the shaft 51, the θ₁ arm 52, and the θ₂ arm 53 from the base of the shaft 51, and is connected to one end of the dispensing nozzle 54. A plunger 57 is movably attached to the syringe 55 to vary an internal volume of the syringe 55. Depending on the moving position of the plunger 57, a sample or a reagent is aspirated or discharged from the tip of the dispensing nozzle 54. A capacitive contact detector 58 is connected to the dispensing nozzle 54 and can detect that the dispensing nozzle 54 has come into contact with a conductive material such as a sample or a reagent.

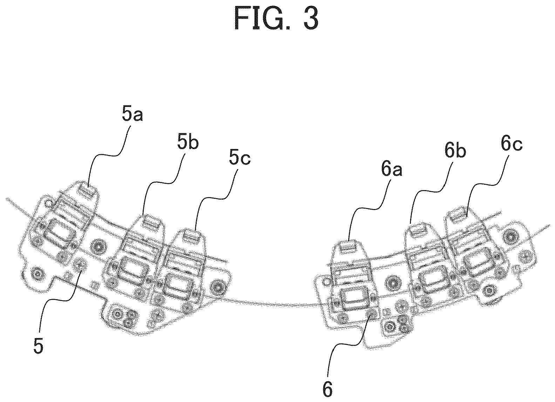

Fig. 3 is a view that shows details of the stirring mechanisms 5 and 6. A mixture of a reagent and a sample is stirred twice by the stirring mechanism 5 and the stirring mechanism 6 to secure a sufficient stirring time. The stirring mechanism 5 includes a first stirring mechanism 5a for stirring a mixture of a first reagent and a sample, a second stirring mechanism 5b for stirring a mixture of a second reagent and a sample, and a third stirring mechanism 5c for stirring a mixture of a third reagent and a sample. The stirring mechanism 6 includes a fourth stirring mechanism 6a for stirring a mixture of a first reagent and a sample, a fifth stirring mechanism 6b for stirring a mixture of a second reagent and a sample, and a sixth stirring mechanism 6c for stirring a mixture of a third reagent and a sample. All of the stirring mechanisms are capable of stirring a mixture in a non-contact manner using ultrasonic waves generated from a piezoelectric element.

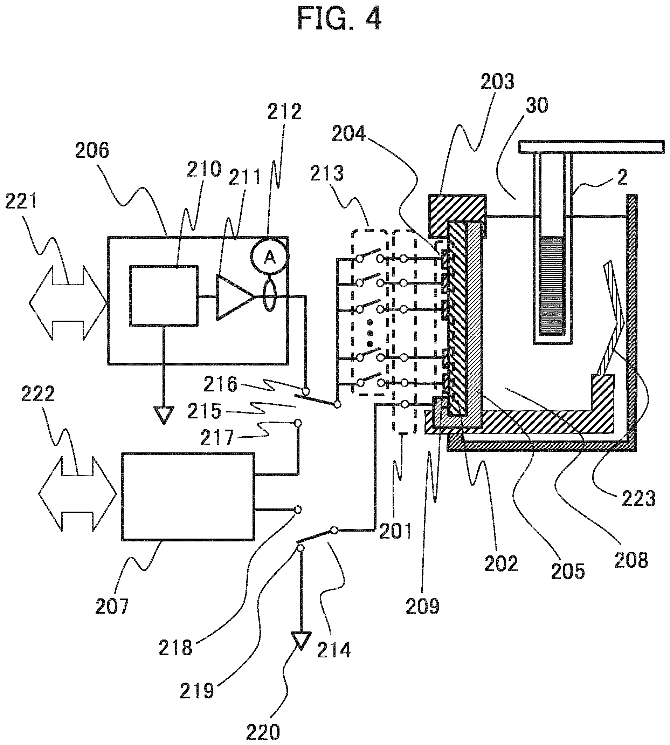

Fig. 4 is a diagram that shows configurations of a stirring mechanism, and a power amplifier and an impedance measuring unit which are connected to the stirring mechanism. Fig. 4 shows a cross-section of the stirring mechanism in a vertical direction along the radial direction of the reaction disk 1, and an electrical circuit disposed on the control unit 41 side with respect to a connector 201 shows a schematic configuration. Although the first stirring mechanism 5a will be described below as an example, the same applies to the other stirring mechanisms.

As shown in Fig. 4, the stirring mechanism includes a piezoelectric element 202 that generates ultrasonic waves, a jig 203 for attaching the piezoelectric element 202 to the constant temperature bath 30, a reflector 223 that reflects ultrasonic waves having passed through the reaction container 2 and the like toward the reaction container 2, and the connector 201 that electrically connects the piezoelectric element 202 and the control unit 41 side. The piezoelectric element 202 includes segmented electrodes 204 and 209 that are provided on one surface (air side) and is in contact with air, and a constant-temperature water side electrode 205 that is provided on the other surface (constant-temperature water side) and is in contact with constant-temperature water 208. A portion of the constant-temperature water side electrode 205 is folded back to the air side along the lower end surface of the piezoelectric element 202.

The segmented electrodes 204 and 209 are segmented into a plurality of electrodes at different height positions. In the present embodiment, an example in which 13 segmented electrodes are provided (only a portion is shown in Fig. 4) will be described, but the number of segmented electrodes is not limited to 13. The dimension and shape of each segmented electrode can be individually designed freely, but in the present embodiment, the first to twelfth segmented electrodes 204 from the top all have the same shape (same width and length), and only the thirteenth (lowermost) segmented electrode 209 is formed slightly longer than the other segmented electrodes 204. The segmented electrodes are connected one-to-one to pins of the connector 201, respectively.

Next, a configuration of the electrical circuit on the control unit 41 side will be described. First, a power amplifier 206 applies a voltage to the segmented electrodes to drive the piezoelectric element 202 and generate ultrasonic waves. As shown in Fig. 4, the power amplifier 206 specifically includes a function generating circuit 210 that generates a drive waveform, a final stage amplifier circuit 211 that amplifies the waveform to a desired power, and a current monitor 212 that measures a current flowing through the piezoelectric element 202 when a voltage is applied. The current monitor 212 can be configured to use electromagnetic coupling, for example. On the other hand, an impedance measuring circuit 207 measures frequency characteristics (hereinafter may be abbreviated as "ImpS") of an electric impedance of the piezoelectric element 202. ImpS of the piezoelectric element 202 is represented by, for example, a set of ImpS applied to the segmented electrodes (that is, ImpS between the segmented electrodes 204 and 209 and the constant-temperature water side electrode 205).

The power amplifier 206 is provided with a first interface unit 221 connected to the control unit 41, and the control unit 41 controls the power amplifier 206 via the first interface unit 221. Similarly, the impedance measuring circuit 207 is provided with a second interface unit 222 connected to the control unit 41, and the control unit 41 controls the impedance measuring circuit 207 via the second interface unit 222. The impedance measuring circuit 207 transmits a measurement result of ImpS to the control unit 41 via the second interface unit 222.

Here, the power amplifier 206 and the impedance measuring circuit 207 are connected to the stirring mechanism via the connector 201. Relays 213 are disposed between the power amplifier 206, the impedance measuring circuit 207, and the connector 201. The relays 213 include a plurality of switches, and the opening and closing of each switch is controlled by commands received from the control unit 41.

That is, the relays 213 function as a switch device that switches connection between the power amplifier 206, the impedance measuring circuit 207, and each of the segmented electrodes 204 and 209.

The control unit 41 selects one or more segmented electrodes 204 and 209 at appropriate positions according to a liquid level position (liquid level height) of a liquid in the reaction container 2, and controls the relays 213 so that a voltage is applied to the selected segmented electrodes 204 and 209. For example, the control unit 41 can apply a voltage to only the segmented electrode at a low position according to the liquid level position when the liquid level position is low, and the control unit 41 can apply a voltage to the segmented electrode at a higher position when the liquid level position is higher. As such, the irradiation position of ultrasonic waves on the reaction container 114 is adjusted.

A first changeover switch 215 is installed between the power amplifier 206, the impedance measuring circuit 207, and the relays 213 to switch between connecting the piezoelectric element 202 to the power amplifier 206 and connecting the piezoelectric element 202 to the impedance measuring circuit 207. A second changeover switch 214 is installed between the impedance measuring circuit 207 and the connector 201 to switch between connecting the impedance measuring circuit 207 to the piezoelectric element 202 and connecting the impedance measuring circuit 207 to the ground. For example, during a stirring operation, the first changeover switch 215 is connected to a terminal 216 of the power amplifier 206, and the second changeover switch 214 is connected to a terminal 219 (finally connected to a ground 220). On the other hand, during ImpS measurement, the first changeover switch 215 is connected to an output terminal 217 of the impedance measuring circuit 207, and the second changeover switch 214 is connected to an input terminal 218 of the impedance measuring circuit 207.

As such, the control unit 41 of the present embodiment applies a voltage to one or more of the segmented electrodes 204 and 209 via the power amplifier 206, and measures ImpS of the piezoelectric element 202 via the impedance measuring circuit 207. The impedance measuring circuit 207 does not need to be configured independently from the control unit 41 as shown in Fig. 4, and may be configured as a single electronic circuit in which the impedance measuring circuit 207 and the control unit 41 are integrated.

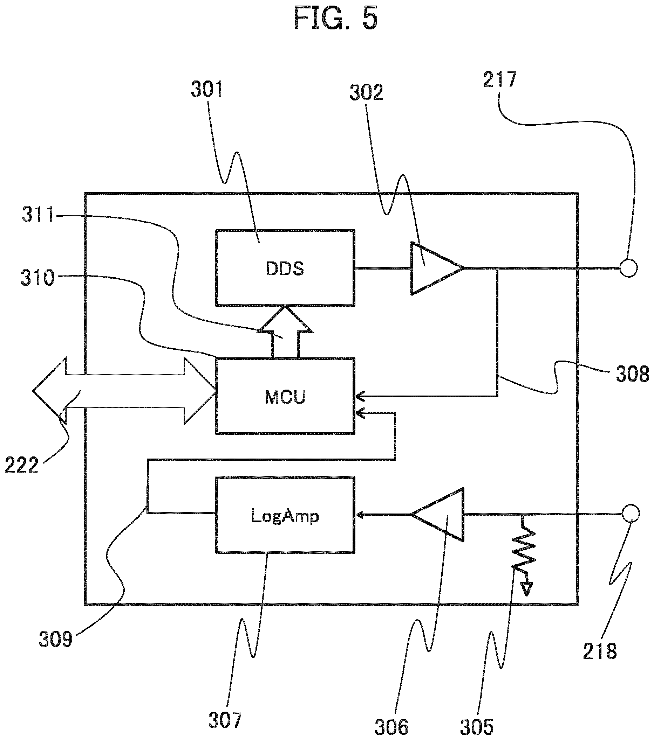

Fig. 5 is a diagram that shows details of the structure of the impedance measuring circuit 207. In the impedance measuring circuit 207 shown in Fig. 5, a direct digital synthesizer (hereinafter abbreviated as "DDS") 301 generates a sinusoidal voltage having a random frequency. The sinusoidal voltage generated by the DDS 301 is amplified by an amplifier 302 and output from the output terminal 217. The output terminal 217 is connected to the segmented electrode 204 via the first changeover switch 215 and the relays 213, and a sinusoidal voltage is applied to the piezoelectric element 202 by the segmented electrode 204.

Here, the magnitude of the applied voltage can be designed as appropriate depending on the characteristics of the piezoelectric element 202, and the like. However, when ImpS is measured, a voltage smaller than that during a stirring operation (for example, a voltage referred to as a weak voltage) is set, whereby it is possible to prevent the piezoelectric element 202 from being damaged. A current flowing through the piezoelectric element 202 when voltage is applied flows into the input terminal 218 via the constant-temperature water side electrode 205 and the relays 213, and is detected as a voltage value by a detection resistance 305.

A voltage signal detected by the detection resistance 305 is further amplified by a logarithmic amplifier 307 (LogAmp) via an operational amplifier 306 that is linearly amplified with an appropriate gain. A voltage applied to the piezoelectric element 202 from the output terminal 217 is input to a micro control unit (hereinafter abbreviated as "MCU") 310 via a wire 308. The voltage amplified by the logarithmic amplifier 307 is also input to the MCU 310 via a wire 309. In the embodiment shown in Fig. 5, a resolution of an A/D converter built in the MCU 310 is assumed to be approximately 8 to 10 bits, and thus the logarithmic amplifier 307 is used. However, when the MCU 310 including an A/D converter with a higher resolution is adopted, a linear amplifier may be used instead of a logarithmic amplifier.

A voltage signal input to the MCU 310 is A/D converted. The MCU 310 transmits a control signal 311 to the DDS 301 to sweep the frequency of a sine wave to be generated within a desired frequency range. The frequency here, the voltage applied from the output terminal 217, and the measured voltage corresponding to the current flowing through the piezoelectric element 202 are stored in a memory in the MCU 310, and transmitted to the control unit 41 via the second interface unit 222 as a measurement result of ImpS.

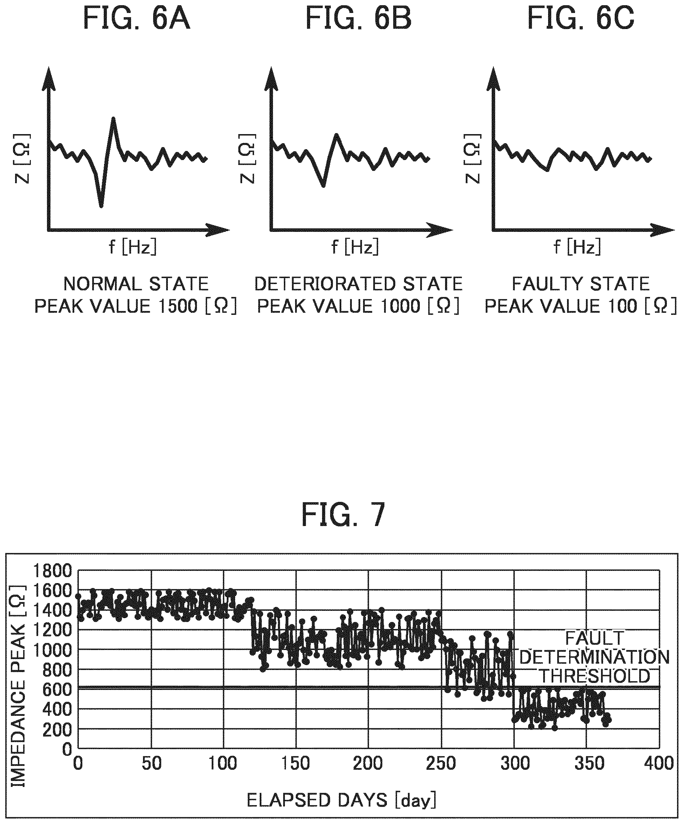

Next, a method of determining whether the piezoelectric element 202 (individual segmented electrodes) is abnormal based on the measurement result of ImpS will be described using Figs. 6A to 7.

Fig. 6A is a graph that shows ImpS measured by the piezoelectric element 202 in a normal state, Fig. 6B is a graph that shows ImpS measured by the piezoelectric element 202 in a deteriorated state, and Fig. 6C is a graph that shows ImpS measured by the piezoelectric element 202 in a faulty state. As can be seen with reference to Figs. 6A and 6B, when the piezoelectric element 202 deteriorates, a peak value of an electric impedance decreases as compared to when the piezoelectric element 202 is normal. As can be seen with reference to Figs. 6B and 6C, when deterioration of the piezoelectric element 202 progresses and leads to failure, the peak value of the electric impedance further decreases.

Fig. 7 is a graph that shows change over time in a peak value of an electric impedance measured by the piezoelectric element 202. When a voltage is repeatedly applied to the segmented electrodes of the piezoelectric element 202, the segmented electrodes gradually deteriorate, and as shown in Fig. 7, the peak value of the electric impedance decreases. Thus, when the peak value of a measured electric impedance is lower than a predetermined threshold value, the control unit 41 according to the present embodiment determines that the segmented electrode is faulty, and issues an alarm via the output unit 46. The control unit 41 may predict the future electric impedance based on change over time in electric impedance measured so far, and may output the time of deterioration of the segmented electrode to the output unit 46. Here, information to be output to the output unit 46 may include the time when maintenance is required, segmented electrodes to be subjected to maintenance, and the like.

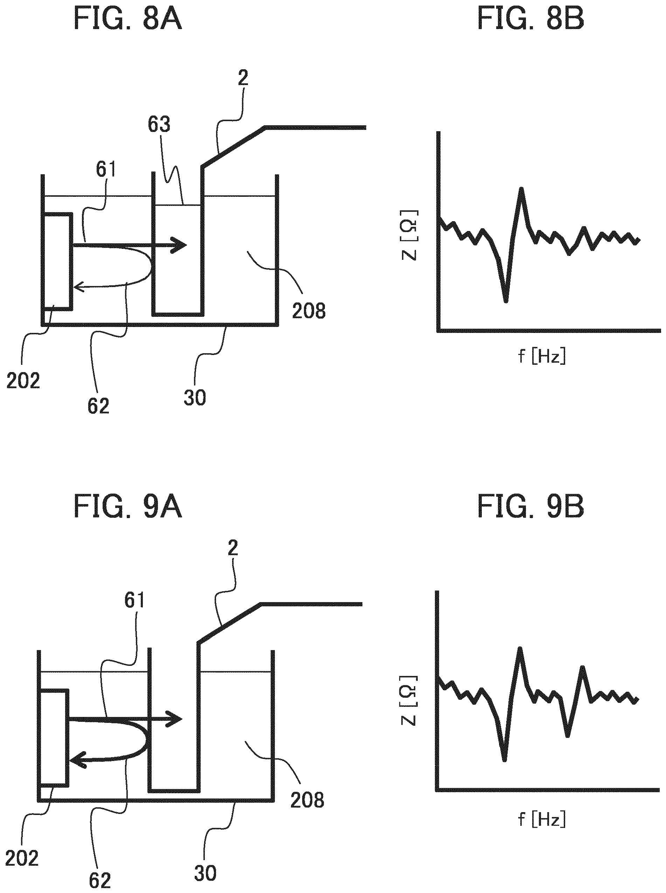

Next, a situation in which a voltage is applied to normal segmented electrodes constituting the piezoelectric element 202 and the reaction container 2 is irradiated with ultrasonic waves through the constant-temperature water 208 in the constant temperature bath 30 will be described with reference to Fig. 8A to Fig. 9B.

Fig. 8A is a conceptual diagram that shows reflected waves when the reaction container 2 containing a liquid (for example, a detergent 63) is irradiated with ultrasonic waves 61, and Fig. 8B is a graph that shows ImpS measured when the reaction container 2 containing a liquid is irradiated with ultrasonic waves. As shown in Fig. 8A, when a liquid is included in the reaction container 2, a difference in acoustic impedance at the interface of the reaction container 2 is small, and thus most of the ultrasonic waves 61 that have propagated through the constant-temperature water 208 pass through the reaction container 2, and the amount of reflected waves 62 reflected by the reaction container 2 is small. Thus, as shown in Fig. 8B, a noise component included in ImpS is reduced.

On the other hand, Fig. 9A is a conceptual diagram that shows reflected waves when an empty reaction container 2 is irradiated with the ultrasonic waves 61, and Fig. 9B is a graph that shows ImpS measured when the empty reaction container 2 is irradiated with ultrasonic waves. As shown in Fig. 9A, when air is included in the reaction container 2, a difference in acoustic impedance at the interface of the reaction container 2 is large, and thus the proportion of the reflected waves 62 reflected by the reaction container 2 in the ultrasonic waves 61 that have propagated through the constant-temperature water 208 increases. Thus, as shown in Fig. 9B, the amount of noise component included in ImpS increases.

As such, to determine with high accuracy whether the piezoelectric element 202 is abnormal, it is important to measure ImpS by applying a voltage to the segmented electrodes while a liquid is included in the reaction container 2.

However, when an object to be irradiated with ultrasonic waves to determine whether the piezoelectric element 202 is abnormal is a mixture of a sample and a reagent, the liquid properties of the mixture differ each time, and thus the accuracy of the determination is affected. In a series of analysis sequences, when ImpS measurement is performed on the reaction container 2 being stopped at a stirring position of the stirring mechanism before a stirring operation for promoting reaction, a period of time for which the reaction disk 1 stops is increased, which leads to a concern for a decrease in the processing capability of the automatic analyzer.

Consequently, in the present embodiment, during background maintenance performed in parallel to analysis in an operation state, ImpS measurement is performed while the reaction container 2 into which only a detergent has been dispensed stops at a stirring position. As such, when background maintenance is performed, ImpS is measured using the reaction container 2 in operation, which leads to an advantage that it is not necessary to add a new special sequence. A series of analysis sequences including background maintenance will be specifically described below.

In a series of analysis sequences, the reaction container 2 used for the analysis is cleaned by the cleaning mechanism 3 using a diluted detergent. However, the diluted detergent is not sufficient to remove dirt accumulated in the reaction container 2 that has been repeatedly and continuously used. Therefore, in the present embodiment, as background maintenance, maintenance in which immersion cleaning is performed with an undiluted detergent 63 for a predetermined period of time is incorporated into the operation in an operation state.

First, an example of the prerequisite operation will be described. The number of reaction containers placed on the reaction disk 1 is 221, and 44 reaction containers rotate per one operation cycle. For example, in an operation cycle 1, a first reaction container stops at a sample dispensing position, and a sample is dispensed into the first reaction container. In an operation cycle 2, a 45th reaction container stops at a sample dispensing position, and a sample is dispensed into the 45th reaction container. Similarly, in operation cycles 3, 4, 5, and 6, samples are dispensed into 89th, 133rd, 177th, and 221st reaction containers, respectively. In an operation cycle 7, the reaction disk 1 makes one revolution, a 44th reaction container stops at a sample dispensing position, and a sample is dispensed into the 44th reaction container. It is assumed that a sample dispensing position and a reagent dispensing position are separated from each other by one operation cycle, that is, by 44 reaction containers.

In the background maintenance, the sample dispensing mechanism does not dispense a sample to a reaction container that stops at a sample dispensing position, for example, once every five cycles. In the next cycle, an empty reaction container moves (rotates) to a reagent dispensing position and stops, and the reagent dispensing mechanism dispenses the detergent 63 into the reaction container. The detergent 63 dispensed by the reagent dispensing mechanism is contained in a predetermined detergent bottle on the reagent disk 11. The liquid level of the detergent 63 in the reaction container may be lower than the water level of the constant-temperature water 208, but the liquid level needs to be higher than the maximum height of the sample dispensed into the reaction container. Thereafter, the reaction container containing the detergent 63 repeatedly moves (rotates) and stops each time the cycle progresses, and is immersed and cleaned. The detergent 63 contained in the reaction container is aspirated by the cleaning mechanism 3 after immersion cleaning. A reagent is also dispensed into the reaction container into which the sample has been dispensed, and a mixture is stirred and analyzed in parallel to the background maintenance.

In the background maintenance, the reaction container containing the detergent 63 (hereinafter sometimes referred to as a detergent storage cell) stops at stirring positions of the first stirring mechanism 5a to the sixth stirring mechanism 6c at a predetermined timing. Thus, in the present embodiment, the abnormality of the piezoelectric element 202 is determined by measuring ImpS of the piezoelectric element 202 for the detergent storage cell stopped at the stirring position.

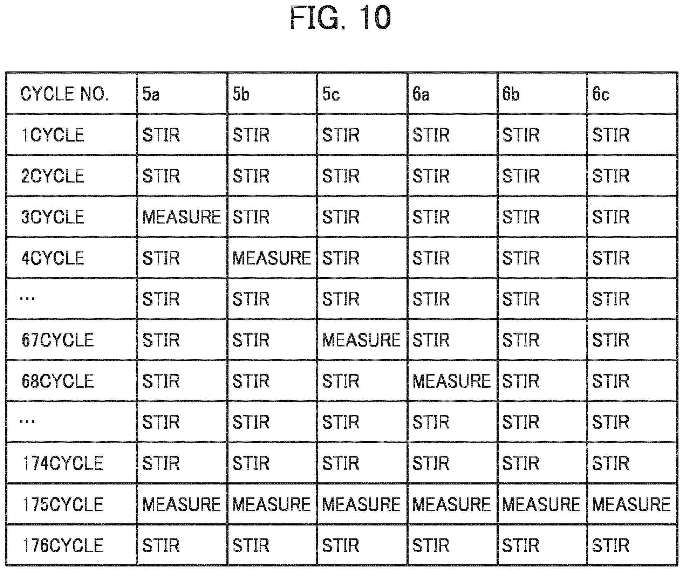

Fig. 10 is a diagram that shows operation of the first stirring mechanism 5a to the sixth stirring mechanism 6c in each cycle. As shown in Fig. 10, each stirring mechanism performs a stirring operation in a cycle in which a reaction container containing a mixture stops at the stirring position of the stirring mechanism, and performs ImpS measurement in a cycle in which the reaction container containing the detergent 63 (detergent storage cell) stops at the stirring position of the stirring mechanism.

### Example 1

As described above, the piezoelectric element 202 of each stirring mechanism is constituted by 13 segmented electrodes, and thus it is necessary to measure ImpS for 13 segmented electrodes to determine abnormality. However, since it takes a certain period of time to perform the ImpS measurement, it is difficult to measure ImpS of all of the segmented electrodes during one stop period (for example, 1 second) of the detergent storage cell. Consequently, in Example 1, each stirring mechanism measures ImpS of one certain segmented electrode in a cycle in which the detergent storage cell stops at a stirring position for the first time, and measures ImpS of another single segmented electrode in a cycle in which the detergent storage cell stops at a stirring position for the second time.

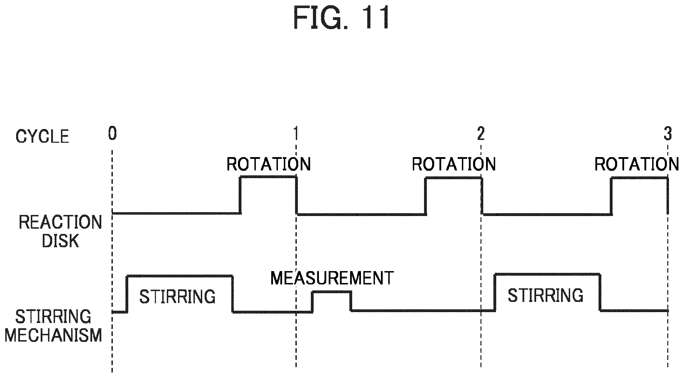

Fig. 11 is a time chart that shows operation of a stirring mechanism (for example, the first stirring mechanism 5a) in each cycle according to Example 1. As shown in Fig. 11, in Example 1, when the reaction disk 1 rotates and a reaction container containing a mixture stops at a stirring position, the first stirring mechanism 5a performs a stirring operation while the corresponding cycle (for example, cycles 0 to 1 in Fig. 11) is stopped. Next, when the reaction disk 1 rotates and a reaction container containing the detergent 63 (detergent storage cell) stops at a stirring position, the first stirring mechanism 5a performs ImpS measurement of one segmented electrode while the corresponding cycle (for example, cycles 1 to 2 in Fig. 11) is stopped.

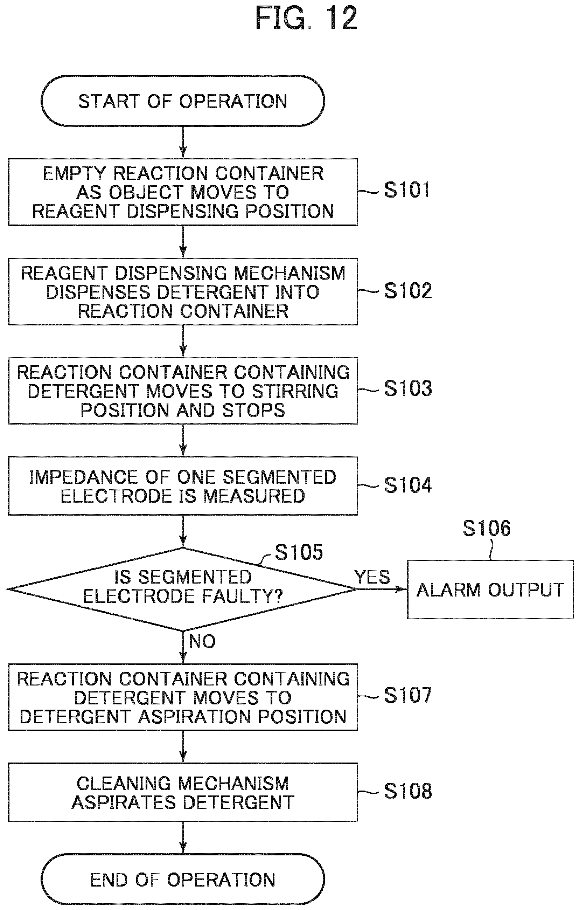

Next, an operation flow of the present embodiment will be described. Fig. 12 is a flowchart regarding abnormality determination of the piezoelectric element 202 which is performed during background maintenance according to Example 1.

An operation is started, the reaction disk 1 repeatedly rotates and stops for each operation cycle, and an empty reaction container to be immersed and cleaned stops at a reagent dispensing position in a predetermined operation cycle (step S101). In the following, description will be given focusing on operations performed for the specific reaction container. While the reaction container is stopped, a reagent dispensing mechanism aspirates the detergent 63 from the detergent bottle on the reagent disk 11 and discharges the detergent into the empty reaction container (step S102).

Next, the cycle progresses, and the reaction container into which the detergent 63 has been discharged (detergent storage cell) stops at a stirring position of a predetermined stirring mechanism in a predetermined operation cycle (step S103). Here, a case where the detergent storage cell stops at the stirring position of the first stirring mechanism 5a will be described.

The control unit 41 measures ImpS of one certain segmented electrode in the piezoelectric element of the first stirring mechanism 5a (step S104). Then, the control unit 41 determines whether the segmented electrode is faulty (step S105). A determination method is as described above. When it is determined in step S105 that the segmented electrode is faulty, the control unit 41 outputs an alarm via the output unit 46 (step S106).

On the other hand, when it is determined in step S105 that the segmented electrode is not faulty, the cycle progresses, and the detergent storage cell stops at a detergent aspiration position in a predetermined operation cycle (step S107).

Thereafter, the cleaning mechanism 3 aspirates the detergent 63 from the detergent storage cell (step S108).

Similarly, discharge and aspiration of the detergent 63 are performed for the other reaction containers, and the reaction containers are immersed and cleaned.

Then, abnormality determination is performed for all of the segmented electrodes until the immersion cleaning for all of the reaction containers to be subjected to background maintenance is completed.

As such, in the present example, abnormality determination of one segmented electrode is performed in one stopping of the detergent storage cell at a stirring position.

### Example 2

When background maintenance is performed as described above, a detergent is dispensed into a reaction container once every five cycles to immerse and clean the reaction container, which results in a reduction in processing capability by the same amount. Here, when one operation cycle is 3.6 seconds (1000 tests/hour) including 1 second of a stop time, it takes 3.6 seconds × 221 reaction containers = 795.6 seconds (approximately 13 minutes) to immerse and clean all of the 221 reaction containers, and thus the processing capability for approximately 13 minutes is reduced to 4/5 (800 tests/hour). When a user cannot accept a reduction in the processing capability for approximately 13 minutes per day, background maintenance is performed over a plurality of days. When the 221 reaction containers are allocated substantially equally over 5 days, 44 reaction containers are allocated for four days and 45 reaction containers are allocated for one day, and a maximum of 45 reaction containers are immersed and cleaned per day. As such, a period of time for which the processing capability is reduced due to background maintenance may be a maximum of 3.6 seconds × 45 reaction containers = 162 seconds (approximately 3 minutes).

When 45 reaction containers are immersed and cleaned per day, 45 detergent storage cells stop once at a stirring position of each stirring mechanism. As described above, each stirring mechanism has 13 segmented electrodes, and thus, when abnormality determination is performed for one new segmented electrode each time a new detergent storage cell stops at a stirring position, abnormality determination can be performed for all 13 segmented electrodes in 6 stirring mechanisms, that is, a total of 6 × 13 = 78 segmented electrodes. However, when it is assumed that there is only one segmented electrode for which ImpS can be measured when the detergent storage cell is stopped (when the reaction disk is stopped) once, and the detergent storage cells are simultaneously stopped at the stirring positions of a plurality of stirring mechanisms, there is a stirring mechanism that cannot measure ImpS even when the detergent storage cells are stopped at the stirring positions. Here, even when there are 45 detergent storage cells, there is a possibility that abnormality determination cannot be performed for all of the 78 segmented electrodes in total.

Consequently, in Example 2, ImpS is measured for two different segmented electrodes of the same stirring mechanism for a common detergent storage cell stopped at the stirring position.

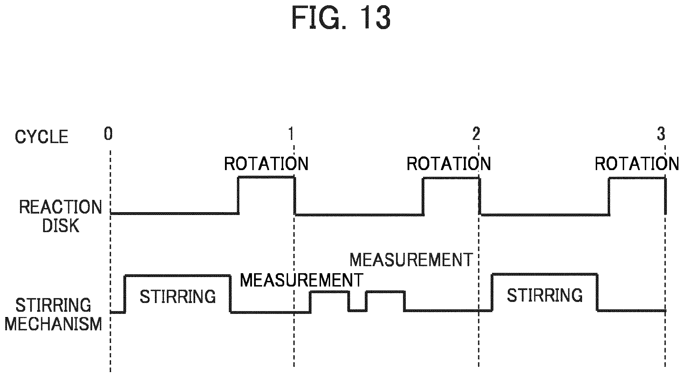

Fig. 13 is a time chart that shows operation of a stirring mechanism (for example, the first stirring mechanism 5a) in each cycle of a stirring mechanism according to Example 2. As shown in Fig. 13, in Example 2, when the reaction disk 1 rotates and a reaction container containing a mixture stops at a stirring position, the first stirring mechanism 5a performs a stirring operation while the corresponding cycle (for example, cycles 0 to 1 in Fig. 13) is stopped. Next, when the reaction disk 1 rotates and a reaction container containing a detergent (detergent storage cell) stops at a stirring position, the first stirring mechanism 5a performs ImpS measurement of two segmented electrodes while the corresponding cycle (for example, cycles 1 to 2 in Fig. 13) is stopped.

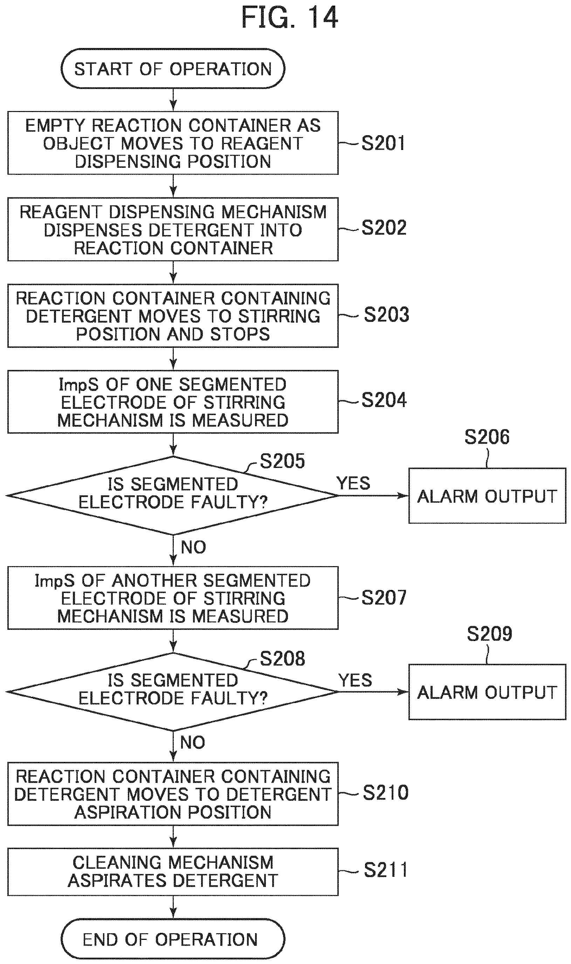

Next, an operation flow of the present embodiment will be described. Fig. 14 is a flowchart regarding abnormality determination of the piezoelectric element 202 which is performed during background maintenance according to Example 2.

An operation is started, the reaction disk 1 repeatedly rotates and stops for each operation cycle, and an empty reaction container to be immersed and cleaned stops at a reagent dispensing position in a predetermined operation cycle (step S201). In the following, description will be given focusing on operations performed for the specific reaction container. While the reaction container is stopped, a reagent dispensing mechanism aspirates the detergent 63 from the detergent bottle on the reagent disk 11 and discharges the detergent 63 into the empty reaction container (step S202).

Next, the cycle progresses, and the reaction container into which the detergent 63 has been discharged (detergent storage cell) stops at a stirring position of a predetermined stirring mechanism in a predetermined operation cycle (step S203). Here, a case where the detergent storage cell stops at the stirring position of the first stirring mechanism 5a will be described.

The control unit 41 measures ImpS of one certain segmented electrode in the piezoelectric element of the first stirring mechanism 5a (step S204). Then, the control unit 41 determines whether the segmented electrode is faulty (step S205). A determination method is as described above. When it is determined in step S205 that the segmented electrode is faulty, the control unit 41 outputs an alarm via the output unit 46 (step S206).

On the other hand, when it is determined in step S105 that the segmented electrode is not faulty, the control unit 41 measures ImpS of another segmented electrode in the piezoelectric element 202 of the first stirring mechanism 5a (step S207). Then, the control unit 41 determines whether the segmented electrode is faulty (step S208). A determination method is as described above. When it is determined in step S208 that the segmented electrode is faulty, the control unit 41 outputs an alarm via the output unit 46 (step S209).

On the other hand, when it is determined in step S208 that the segmented electrode is not faulty, the cycle progresses, and the detergent storage cell stops at a detergent aspiration position in a predetermined operation cycle (step S210).

Thereafter, the cleaning mechanism 3 aspirates the detergent from the detergent storage cell (step S211).

Similarly, discharge and aspiration of the detergent 63 are performed for the other reaction containers, and the reaction containers are immersed and cleaned. Then, abnormality determination is performed for all of the segmented electrodes (78 segmented electrodes) until the immersion cleaning for all of the reaction containers (for example, 45 reaction containers) to be subjected to background maintenance for the day is completed.

As such, in the present example, ImpS of two segmented electrodes of the stirring mechanism corresponding to the stirring position is measured by one stopping of the detergent storage cell at a stirring position, and thus abnormality determination can be performed for all of the number of segmented electrodes exceeding the number of detergent storage cells to be subjected to background maintenance. In the present example, ImpS of two segmented electrodes is measured by one stopping of the detergent storage cell at a stirring position, but when time permits, ImpS of three or more segmented electrodes may be measured.

### Example 3

In Example 3, when different detergent storage cells stop at stirring positions of a plurality of stirring mechanisms at the same time, each stirring mechanism performs abnormality determination for one segmented electrode.

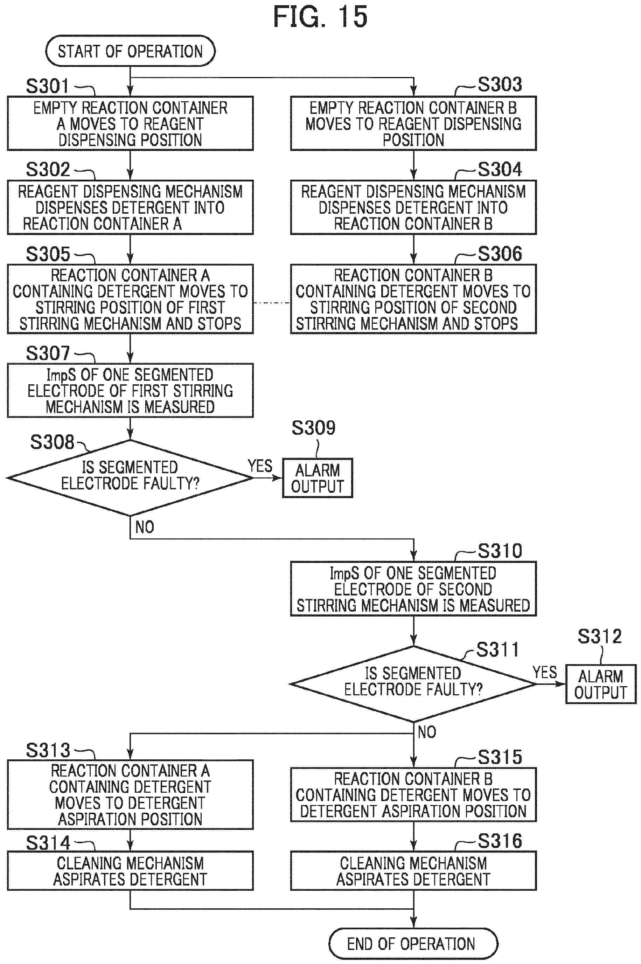

An operation flow of the present embodiment will be described. Fig. 15 is a flowchart regarding abnormality determination of the piezoelectric element 202 which is performed during background maintenance according to Example 3.

An operation is started, the reaction disk 1 repeatedly rotates and stops for each operation cycle, one certain empty reaction container stops at a reagent dispensing position (step S301) in a predetermined operation cycle, and the reagent dispensing mechanism discharges the detergent 63 into the reaction container during the stopping of the reaction container (step S302).

Thereafter, the cycle progresses, and another empty reaction container stops at a reagent dispensing position in a predetermined operation cycle (step S303), and a reagent dispensing mechanism discharges the detergent 63 into the reaction container during the stopping of the reaction container (step S304).

The cycle progresses, the reaction container into which the detergent 63 has been discharged in step S302 (first detergent storage cell) stops at a stirring position of one certain stirring mechanism (for example, the first stirring mechanism 5a) in a predetermined operation cycle (step S305), and simultaneously, the reaction container into which the detergent 63 has been discharged in step S304 (second detergent storage cell) stops at a stirring position of another stirring mechanism (for example, the second stirring mechanism 5b) (step S306).

Here, the control unit 41 measures ImpS of one certain segmented electrode in the piezoelectric element 202 of the first stirring mechanism 5a (step S307). Then, the control unit 41 determines whether the segmented electrode is faulty (step S308). When it is determined in step S308 that the segmented electrode is faulty, the control unit 41 outputs an alarm via the output unit 46 (step S309) .

On the other hand, when it is determined in step S308 that the segmented electrode is not faulty, the control unit 41 measures ImpS of one certain segmented electrode in the piezoelectric element 202 of the second stirring mechanism 5b (step S310). Then, the control unit 41 determines whether the segmented electrode is faulty (step S311). When it is determined in step S311 that the segmented electrode is faulty, the control unit 41 outputs an alarm via the output unit 46 (step S312) .

On the other hand, when it is determined in step S311 that the segmented electrode is not faulty, the cycle progresses, the first detergent storage cell stops at a detergent aspiration position in a predetermined operation cycle (step S313), and the cleaning mechanism 3 aspirates the detergent 63 from the first detergent storage cell (step S314) .

The cycle progresses, the second detergent storage cell stops at a detergent aspiration position in a predetermined operation cycle (step S315), and the cleaning mechanism 3 aspirates the detergent 63 from the second detergent storage cell (step S316) .

Similarly, discharge and aspiration of the detergent 63 are performed for the other reaction containers, and the reaction containers are immersed and cleaned. Then, abnormality determination is performed for all of the segmented electrodes (78 segmented electrodes) until the immersion cleaning for all of the reaction containers (for example, 45 reaction containers) to be subjected to background maintenance for the day is completed.

As such, in the present example, ImpS of segmented electrodes in a plurality of stirring mechanisms is measured when the reaction disk is stopped once, and thus abnormality determination can be performed for all of the number of segmented electrodes exceeding the number of detergent storage cells to be subjected to background maintenance. In the present example, ImpS of segmented electrodes of two stirring mechanisms is measured when the reaction disk is stopped once, but when time permits, ImpS of segmented electrodes of three or more stirring mechanisms may be measured.

The above-described embodiments have been described in detail to describe the invention in an easy-to-understand manner, and are not necessarily limited to having all of the configurations described. For example, in the background maintenance of each of the above-described examples, a reagent dispensing mechanism dispenses a detergent into an empty reaction container into which no sample has been dispensed, and immerses and cleans the reaction container, but the reagent dispensing mechanism may also dispense a liquid (for example, water or a reagent) with the same components other than the detergent into an empty reaction container and may immerse and clean the reaction container. By including sound wave scatterers such as beads in an immersion liquid and scattering sound waves received from a piezoelectric element, it is possible to reduce reflected waves returning from the liquid to the piezoelectric element and suppress noise in ImpS measurement.

Even when it is not background maintenance, when an operation in which a reaction container containing a liquid having the same component stops at a stirring position of a stirring mechanism is included in parallel to analysis during operation, ImpS of segmented electrodes may be measured during the stopping of the reaction container.

### Reference Signs List

1: reaction disk
2: reaction container
3: cleaning mechanism
4: spectral photometer
5: stirring mechanism
5a: first stirring mechanism
5b: second stirring mechanism
5c: third stirring mechanism
6: stirring mechanism
6a: fourth stirring mechanism
6b: fifth stirring mechanism
6c: sixth stirring mechanism
7, 8, 9, 10: reagent dispensing mechanism
11: reagent disk
12: reagent bottle
13, 14: sample dispensing mechanism
17: sample container
18: rack
19: sample transport mechanism
20: reagent pump
21: sample pump
22: cleaning pump
30: constant temperature bath
41: control unit
42: data storage unit
43: input unit
44: measuring unit
45: analyzing unit
46: output unit
51: shaft
52: θ₁ arm
53: θ₂ arm
54: dispensing nozzle
55: syringe
56: tube
57: plunger
58: contact detector
61: ultrasonic wave
62: reflected wave
63: detergent
201: connector
202: piezoelectric element
203: jig
204: segmented electrode
205: constant-temperature water side electrode
206: power amplifier
207: impedance measuring circuit
208: constant-temperature water
209: segmented electrode (lower electrode)
210: function generating circuit
211: final stage amplifier circuit
212: current monitor
213: relays
214: second changeover switch
215: first changeover switch
216: terminal
217: output terminal
218: input terminal
219: terminal
220: ground
221: first interface unit
222: second interface unit
223: reflector
301: DDS
302: amplifier
305: detection resistance
306: operational amplifier
307: logarithmic amplifier
308, 309: wire
310: MCU
311: control signal

## Claims

1. An automatic analyzer comprising:
a sample dispensing mechanism that dispenses a sample into a reaction container;
a reagent dispensing mechanism that dispenses a reagent into the reaction container;
a stirring mechanism that has an electrode;
a reaction disk that rotates and stops the reaction container; and
a control unit that, when the reaction container containing a mixture of the sample and the reagent is stopped at a stirring position, applies a voltage to the electrode and irradiates the mixture with ultrasonic waves, wherein
the control unit applies a voltage to the electrode and measures an electric impedance when, during operation, the reaction container into which a liquid has been dispensed by the reagent dispensing mechanism in an empty state is stopped at the stirring position.

2. The automatic analyzer according to claim 1, further comprising:
a cleaning mechanism that cleans the reaction container after the mixture is analyzed; and
a reagent disk in which the reagent to be dispensed by the reagent dispensing mechanism and a detergent bottle are placed, wherein
the control unit performs background maintenance of at least some of the reaction containers concurrently with analysis of the mixture, and measures an electric impedance when the reaction container as an object of the background maintenance is stopped at the stirring position, and
the background maintenance is cleaning in which, for the at least some reaction containers, the sample is not dispensed and only the detergent is dispensed by the reagent dispensing mechanism and after immersion cleaning, the detergent is aspirated by the cleaning mechanism.

3. The automatic analyzer according to claim 2, wherein
the number of all the electrodes that constitute the stirring mechanism is larger than the number of the reaction containers into which only the detergent is dispensed, and
the control unit applies a voltage to a plurality of the electrodes and measures an electric impedance while the reaction container into which only the detergent has been dispensed is stopped at the stirring position.

4. The automatic analyzer according to claim 3, wherein
the stirring mechanism is comprised of a plurality of the electrodes, and
the control unit applies a voltage to the different electrodes of the same stirring mechanism for the common reaction container and measures an electric impedance.

5. The automatic analyzer according to claim 3, wherein
a plurality of the stirring mechanisms are provided, and
when the different reaction containers into which only the detergent has been dispensed are stopped at a stirring position for each of the stirring mechanisms at the same time, the control unit applies a voltage to the electrode of each of the stirring mechanisms and measures an electric impedance while the reaction containers are stopped.

6. The automatic analyzer according to claim 1, wherein
when a peak value of the measured electric impedance is lower than a threshold, the control unit determines the electrode to be faulty.

7. The automatic analyzer according to claim 1, wherein
the control unit outputs time when the electrode will deteriorate, according to change over time in the measured electric impedance.
